# EUROPEAN PATENT SPECIFICATION

(11) **EP 3 418 602 B1**
(45) Date of publication and mention of the grant of the patent: **07.04.2021**
(21) Application number: 17176618.1
(22) Date of filing: 19.06.2017
(51) Int. Cl.: F16D 65/00, F16D 65/18

(54) **BRAKE CALIPER**
BREMSSATTEL
ÉTRIER DE FREIN

(43) Date of publication of application: 26.12.2018
(73) Proprietor: Liao, Chih-Hsien, Taichung City 40755 (TW)
(72) Inventor: Liao, Chih-Hsien, Taichung City 40755 (TW)
(74) Representative: Würmser, Julian

(56) References cited:
- FR-A1- 2 778 712
- TW-U- M 415 088
- US-A- 2 115 661
- US-A1- 2015 001 010

## Description

The invention relates to a caliper, and more particularly to a brake caliper.

A conventional brake caliper disclosed in Taiwanese Utility Model Patent No. M394267 is used with a brake disk, and includes a main body unit, a swing arm unit pivoted to the main body unit, aliningunit, a hand-brake cable unit and a piston unit. The main body unit has an operating space. The swing arm unit includes two swing arms that are pivoted to the main body unit and that are respectively located at two opposite sides of the operating space. The lining unit includes two linings each of which is disposed between the brake disk and a respective one of the swing arms. The hand-brake cable unit includes an outer tube that abuts against one of the swing arms, and a cable that extends through the outer cable and that has an end connected to the other one of the swing arms, and an opposite end connected to a hand-brake lever.

The conventional brake caliper can be actuated to inhibit rotation of the brake disk by the piston unit or by the hand-brake cable unit.

Another conventional brake caliper disclosed in Taiwanese Utility Model Patent No. M415088 is also used with a brake disk, and includes a main body unit, a piston unit, a lining unit and a hand-brake unit. The main body unit includes first and second side seats that cooperatively define an operating space therebetween. The lining unit includes first and second positioning members that are associated with the piston unit, and first and second linings that are respectively mounted to the first and second positioning members. The hand-brake unit includes a driving member, a first push member and a second push member. The first and second push members are respectively driven by first and second driving portions of the driving member to respectively push the first and second linings to contact and inhibit rotation of the brake disk.

An object of the invention is to provide a brake caliper that has a novel structure.

According to the invention the brake caliper adapted to be used with a brake disk is disclosed in claim 1. The brake disk has a rotating axis, and opposite first and second end surfaces perpendicular to the rotating axis. The brake caliper includes a main body unit, a piston unit, a lining unit and a hand-brake unit. The main body unit includes first and second side seats that are located respectively at two sides of the brake disk and adjacent respectively to the first and second end surfaces . The first and second side seats are interconnected and cooperatively define an operating space therebetween that partially receives the brake disk. The first side seat has at least one first oil chamber that faces toward the first end surface of the brake disk. The second side seat has at least one second oil chamber that faces toward the second end surface of the brake disk. The piston unit includes at least one first piston that is movably disposed in the first oil chamber, and at least one second piston that is movably disposed in the second oil chamber. The lining unit includes first and second positioning members that are movably disposed in the operating space, and first and second linings that are respectively mounted to the first and second positioning members. The first positioning member is associated with the first piston. The second positioning member is associated with the second piston. The hand-brake unit includes a driving member that extends along a central axis and that is mounted to the first and second side seats, a first push member that is disposed between the first side seat and the first positioning member, and a second push member that is disposed between the second side seat and the second positioning member. The central axis is parallel to the rotating axis. The driving member has an elongated rod body that extends along the central axis, an operating portion that is disposed at a longitudinal end of the rod body, an abutment portion that is fixedly disposed at the other longitudinal end of the rod body opposite to the operating portion and that is for abutment against the first push member, and an urging portion that is fixedly disposed on the rod body, that is located between the operating portion and the abutment portion, and that has an inclined urging surface oblique to the central axis and facing toward the abutment portion. The first push member is disposed at one side of the abutment portion proximate to the urging portion, and is formed with a first through hole that permits the driving member to movably extend therethrough. The second push member is disposed at one side of the urging portion proximate to the abutment portion, is formed with a second through hole that permits the driving member to movably extend therethrough, and has an inclined abutment surface that is oblique to the central axis and that is for being in slidable contact with the urging surface of the driving member. When the driving member is rotated about the central axis relative to the first and second push members to generate a relative rotational movement between the inclined urging surface and the inclined abutment surface, the urging surface of the driving member pushes the abutment surface of the second push member to move the first and second push members toward each other so as to push the first and second linings to respectively and frictionally contact the first and second end surfaces of the brake disk for inhibiting rotation of the brake disk.

Other features and advantages of the invention will become apparent in the following detailed description of the embodiment with reference to the accompanying drawings, of which:
Figure 1 is a perspective view illustrating an embodiment of the brake caliper according to the invention;
Figure 2 is an exploded perspective view illustrating the embodiment;
Figure 3 is a schematic sectional view illustrating the embodiment when not being operated;
Figure 4 is a schematic sectional view taken along line IV-IV in Figure 3, illustrating the embodiment when not being operated; and
Figure 5 is another schematic sectional view illustrating a hand-brake unit of the embodiment when being operated.

Before the invention is described in greater detail, it should be noted that where considered appropriate, reference numerals or terminal portions of reference numerals have been repeated among the figures to indicate corresponding or analogous elements, which may optionally have similar characteristics.

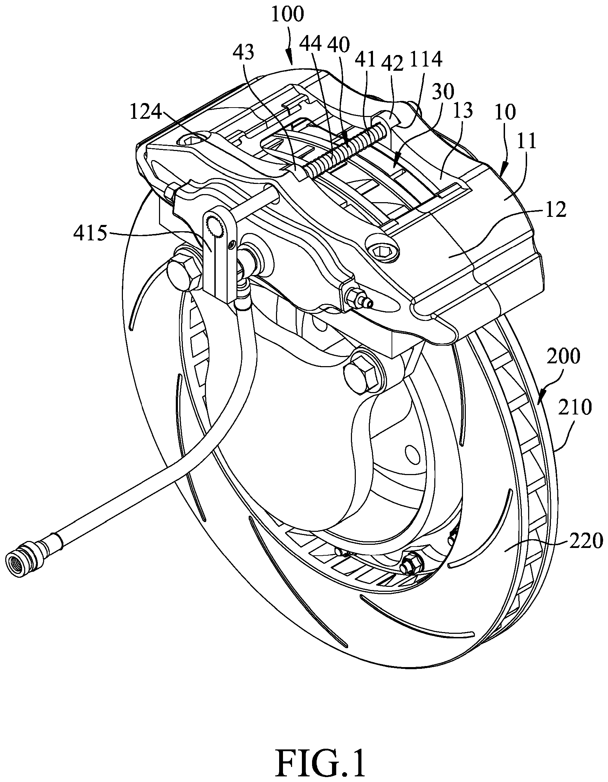

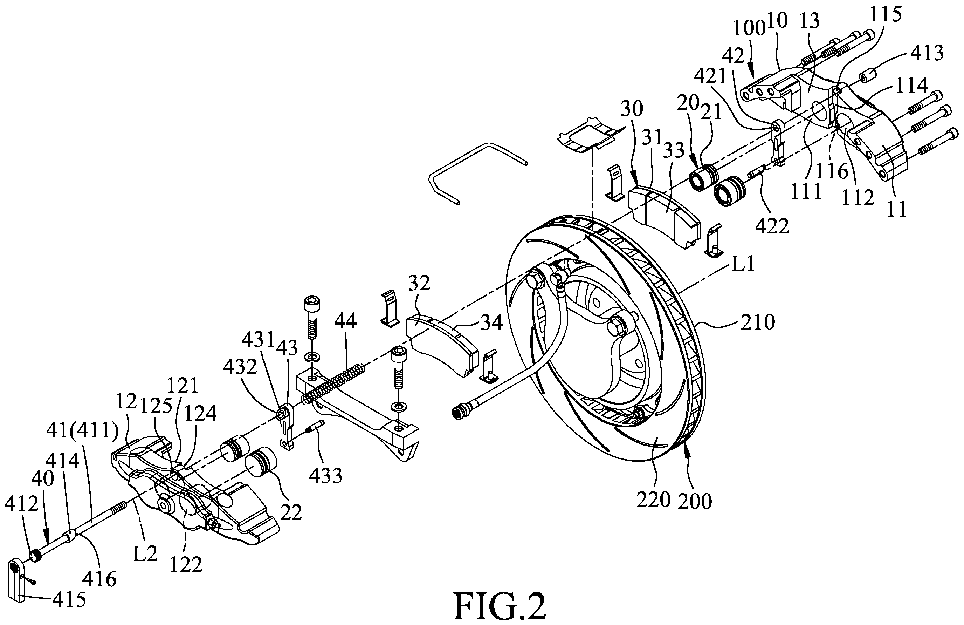

Referring to Figures 1 to 3, an embodiment of the brake caliper 100 according to this invention is used with a brake disk 200, and cooperates with the brake disk 200 to serve as a parking brake. The brake disk 200 has a rotating axis (L1), and opposite first and second end surfaces 210, 220 perpendicular to the rotating axis (L1). The brake caliper 100 includes a main body unit 10, a piston unit 20, a lining unit 30, and a hand-brake unit 40.

The main body unit 10 includes first and second side seats 11, 12 located respectively at two sides of the brake disk 200 and adjacent respectively to the first and second end surfaces 210, 220. The first and second side seats 11, 12 are interconnected, and cooperatively define an operating space 13 therebetween that partially receives the brake disk 200. The first side seat 11 has a first inner side surface 111 that faces toward the operating space 13, two first oil chambers 112 that are formed in the first inner side surface 111, a first oil path 113 that is in fluid communication with the first oil chambers 112, a first engaging groove 114 that is formed in the first inner side surface 111 and that is located between the first oil chambers 112, a first axle hole 115 that is in spatial communication with an upper portion of the first engaging groove 114, and a first slide hole 116 that is in spatial communication with a lower portion of the first engaging groove 114. The first axle hole 115 extends along a central axis (L2) that is parallel to the rotating axis (L1). The first slide hole 116 extends in an axis parallel to the rotating axis (L1) and the central axis (L2). The second side seat 12 has a second inner side surface 121 that faces toward the operating space 13, two second oil chambers 122 that are formed in the second inner side surface 121, a second oil path 123 that is in fluid communication with the second oil chambers 122, a second engaging groove 124 that is formed in the second inner side surface 121 and that is located between the second oil chambers 122, a second axle hole 125 that is in spatial communication with an upper portion of the second engaging groove 124, and a second slide hole 126 that is in spatial communication with a lower portion of the second engaging groove 124. The second axle hole 125 extends along the central axis (L2), and is aligned with the first axle hole 115. The second slide hole 126 extends in an axis parallel to the rotating axis (L1) and the central axis (L2).

The piston unit 20 includes two first pistons 21 that are respectively disposed in the first oil chambers 112 and that are movable in the direction of the central axis (L2), and two second pistons 22 that are respectively disposed in the second oil chambers 122 and that are movable in the direction of the central axis (L2).

The lining unit 30 includes first and second positioning members 31, 32 that are disposed in the operating space 13 and that are movable in the direction of the central axis (L2), and first and second linings 33, 34 that are respectively mounted to the first and second positioning members 31, 32. The first positioning member 31 is driven by the first pistons 21. The second positioning member 32 is driven by the second pistons 22. In this embodiment, the first and second positioning members 31, 32 are respectively located at two opposite sides of the brake disk 200 along the rotating axis (L1). The first lining 33 is located between the first positioning member 31 and the brake disk 200. The second lining 34 is located between the second positioning member 32 and the brake disk 200.

The hand-brake unit 40 includes a driving member 41 extending along the central axis (L2), a first push member 42 driven by the driving member 41, a second push member 43 driven by the driving member 41, and a resilient member 44 sleeved on the driving member 41.

The driving member 41 is mounted to the first and second side seats 11, 12, and has an elongated rod body 411 that extends along the central axis (L2), an operating portion 412 that is disposed at a longitudinal end of the rod body 411, an abutment portion 413 that is fixedly disposed at the other longitudinal end of the rod body 411 opposite to the operating portion 412 and that has a diameter larger than that of the rod body 411, an urging portion 414 that is fixedly disposed on the rod body 411 and that is located between the operating portion 412 and the abutment portion 413, and a driven portion 415 that is mounted to the operating portion 412 and that is operable to rotate the rod body 411 about the central axis (L2). In one embodiment, the abutment portion 413 is configured as a tubular member that is threadedly fixed to the rod body 411 and that is for abutment against the first push member 42. The urging portion 414 has an inclined urging surface 416 that is oblique to the central axis (L2) and that faces toward the abutment portion 413. In one embodiment, the abutment portion 413 movably extends into the first axle hole 115 of the first side seat 11, and the urging portion 414 movably extends into the second axle hole 125 of the second side seat 12.

The first push member 42 is disposed between the first side seat 11 and the first positioning member 31, and is disposed at one side of the abutment portion 413 proximate to the urging portion 414. The first push member 42 slidably engages the first engaging groove 114 of the first side seat 11, and is movable relative to the first side seat 11 along the central axis (L2) . The first push member 42 is formed with a first through hole 421 that permits the rod body 411 to movably extend therethrough, and has a first pin 422 that is slidable along the first slide hole 116.

The second push member 43 is disposed between the second side seat 12 and the second positioning member 32, and is disposed at one side of the urging portion 414 proximate to the abutment portion 413. The second push member 43 slidably engages the second engaging groove 124 of the second side seat 12, and is movable relative to the second side seat 12 along the central axis (L2). The second push member 43 is formed with a second through hole 431 that permits the rod body 411 to movably extend therethrough. The second push member 43 has a second pin 433 that is slidable along the second slide hole 126, and an inclined abutment surface 432 that is oblique to the central axis (L2) and that is for being in slidable contact with the urging surface 416 of the driving member 41.

The resilient member 44 is sleeved on the rod body 411, and has two opposite ends respectively abutting against the first and second push members 42, 43 for resiliently biasing the first and second push members 42, 43 away from each other.

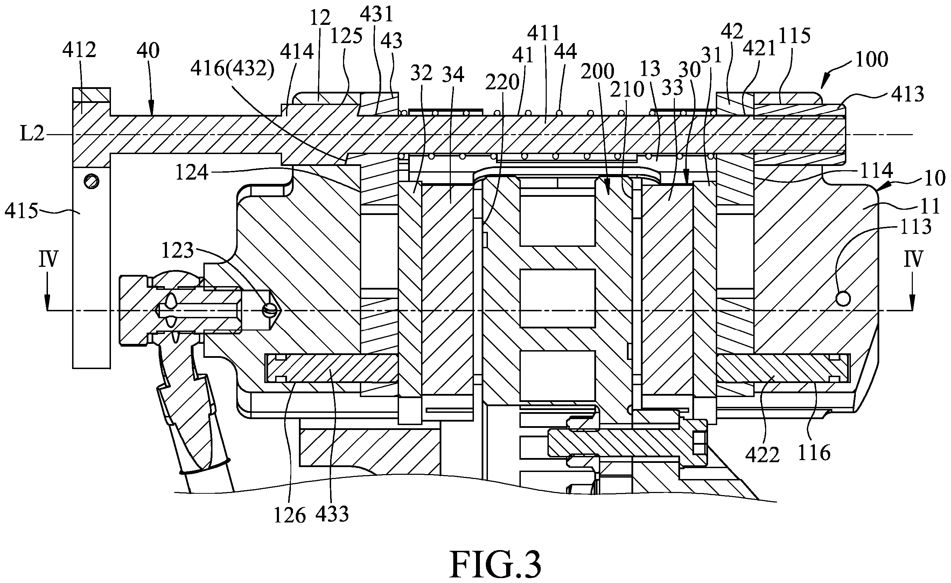

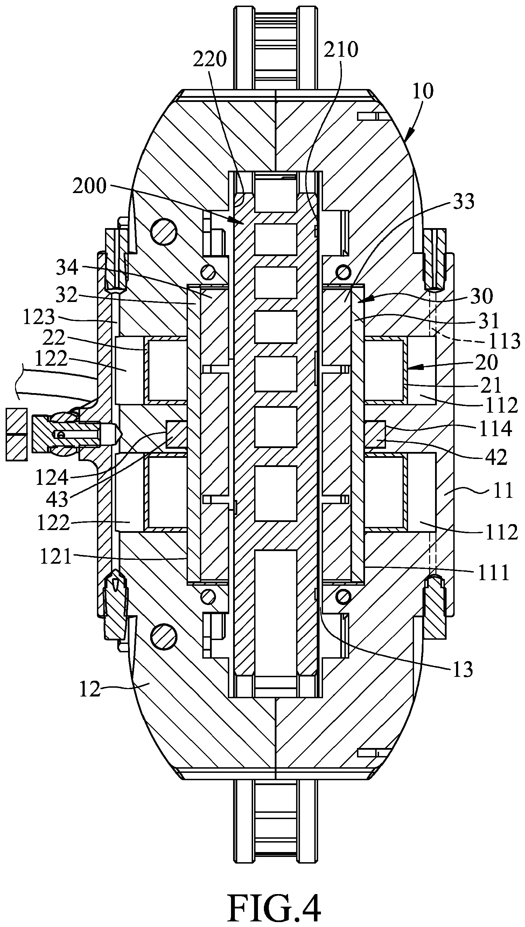

Referring to Figures 3 and 4, when the brake caliper 100 is not being operated, the first lining 33 is spaced apart from the first end surface 210 of the brake disk 200, and the second lining 34 is spaced apart from the second end surface 220 of the brake disk 200, so that the brake disk 200 is permitted to rotate freely. At this time, a distance between the first and second push members 42, 43 is relatively long, and the urging surface 416 of the driving member 41 and the abutment surface 432 of the second push member 43 substantially cling to each other.

When a user steps on a brake pedal (not shown), an oil pump (not shown) pumps oil into the first oil chambers 112 via the first oil path 113, and into the second oil chambers 122 via the second oil path 123, so that the first pistons 21 are moved toward the brake disk 200 to push the first positioning member 31 and the first lining 33 against the first end surface 210 of the brake disk 200, and that the second pistons 22 are moved toward the brake disk 200 to push the second positioning member 32 and the second lining 34 against the second end surface 220 of the brake disk 200 to inhibit rotation of the brake disk 200.

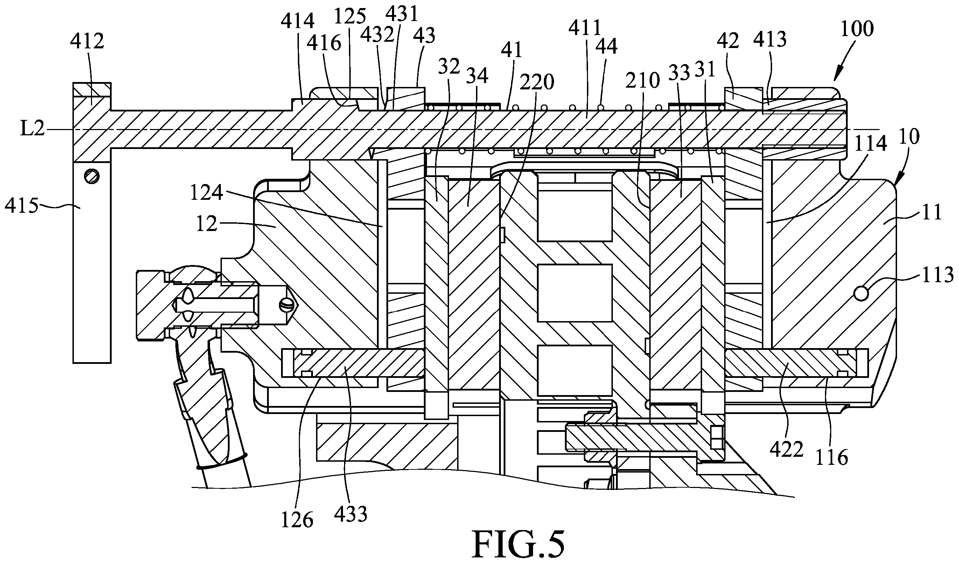

Referring further to Figure 5, when the user pulls a hand brake lever (not shown) that is associated with the driven portion 415, the driven portion 415 is driven to rotate the driving member 41 about the central axis (L2) relative to the first and second push members 42, 43, so that the urging surface 416 of the driving member 41 pushes the abutment surface 432 of the second push member 43 to move the second push member 43 toward the first push member 42 so as to reduce the distance between the first and second push members 42, 43. During the relative movement of the first and second push members 42, 43 toward each other, the first push member 42 pushes the first positioning member 31 and the first lining 33 toward the first end surface 210 of the brake disk 200, and the second push member 43 pushes the second positioning member 32 and the second lining 34 toward the second end surface 220 of the brake disk 200 until the first and second linings 33, 34 are respectively in frictional contact with the first and second end surfaces 210, 220 for inhibiting rotation of the brake disk 200. The first pin 422 of the first push member 42 slides along the first slide hole 116, so that the first push member 42 moves smoothly relative to the first side seat 11 and is prevented from rotating about the central axis (L2) relative to the first side seat 11. The second pin 433 of the second push member 43 slides along the second slide hole 126, so that the second push member 43 moves smoothly relative to the second side seat 12 and is prevented from rotating about the central axis (L2) relative to the second side seat 12. At this time, the resilient member 44 is compressed to generate a restoring force.

By rotating the driving member 41 to generate the relative rotational movement between the inclined urging surface 416 and the inclined abutment surface 432, the first and second push members 42, 43 can be moved toward each other to move the first and second linings 33, 34 to frictionally contact the brake disk 200 for inhibiting rotation of the brake disk 200.

When the hand brake lever is released such that the driving member 41 is rotated in an opposite direction, the urging surface 416 is rotated relative to the abutment surface 432, so as to permit the resilient member 44 to bias the first and second push members 42, 43 to move away from each other, and to permit the first and second linings 33, 34 to move back to their original position, as shown in Figure 3.

In summary, the brake caliper 100 of this invention can be actuated by the brake pedal or by the hand brake lever for inhibiting rotation of the brake disk 200, has a relatively simple structure, and can be assembled easily.

## Claims

1. A brake caliper (100) adapted to be used with a brake disk (200), the brake disk (200) having a rotating axis (L1), and opposite first and second end surfaces (210, 220) perpendicular to the rotating axis (L1), said brake caliper (100) comprising:
a main body unit (10) including first and second side seats (11, 12) that are located respectively at two sides of the brake disk (200) and adjacent respectively to the first and second end surfaces (210, 220), said first and second side seats (11, 12) being interconnected and cooperatively defining an operating space (13) therebetween that is adapted to partially receive the brake disk (200), said first side seat (11) having at least one first oil chamber (112) that is adapted to face toward the first end surface (210) of the brake disk (200), said second side seat (12) having at least one second oil chamber (122) that is adapted to face toward the second end surface (220) of the brake disk (200) ;
a piston unit (20) including at least one first piston (21) that is movably disposed in said first oil chamber (112), and at least one second piston (22) that is movably disposed in said second oil chamber (122);
a lining unit (30) including first and second positioning members (31, 32) that are movably disposed in said operating space (13), and first and second linings (33, 34) that are respectively mounted to said first and second positioning members (31, 32), said first positioning member (31) being associated with said first piston (21), said second positioning member (32) being associated with said second piston (22); and
a hand-brake unit (40) including a driving member (41) that extends along a central axis (L2) and that is mounted to said first and second side seats (11, 12), a first push member (42) that is disposed between said first side seat (11) and said first positioning member (31), and a second push member (43) that is disposed between said second side seat (12) and said second positioning member (32), the central axis (L2) being parallel to the rotating axis (L1);
said driving member (41) having an elongated rod body (411) that extends along the central axis (L2), an operating portion (412) that is disposed at a longitudinal end of said rod body (411), an abutment portion (413) that is fixedly disposed at the other longitudinal end of said rod body (411) opposite to said operating portion (412), said brake caliper being **characterized in that** an urging portion (414) is fixedly disposed on said rod body (411), that is located between said operating portion (412) and said abutment portion (413), and that has an inclined urging surface (416) oblique to the central axis (L2) and facing toward said abutment portion (413), said first push member (42) being disposed between said abutment portion (413) and said urging portion (414), abutting against said abutment portion (413), and being formed with a first through hole (421) that permits said driving member (41) to movably extend therethrough, said second push member (43) being disposed between said urging portion (414) and said abutment portion (413), abutting against said urging portion (414), being formed with a second through hole (431) that permits said driving member (41) to movably extend therethrough, and having an inclined abutment surface (432) that is oblique to the central axis (L2), that faces said urging portion (414) and that is in slidable contact with said urging surface (416) of said urging portion (414);
wherein, when said operating portion (412) is rotated by an external force such that said driving member (41) is rotated about the central axis (L2) relative to said first and second push members (42, 43) to generate a relative rotational movement between said inclined urging surface (416) and said inclined abutment surface (432), said urging surface (416) of said driving member (41) pushes said abutment surface (432) of said second push member (43) to move said first and second push members (42, 43) toward each other so as to push said first and second linings (33, 34) to respectively and frictionally contact the first and second end surfaces (210, 220) of the brake disk (200) for inhibiting rotation of the brake disk (200).

2. The brake caliper (100) as claimed in claim 1, **characterized in that** said driving member (41) of said hand-brake unit (40) further has a driven portion (415) that is mounted to said operating portion (412) and that is operable to rotate said driving member (41) about the central axis (L2).

3. The brake caliper (100) as claimed in claim 2, further **characterized in that** said first side seat (11) further has a first axle hole (115) that permits said abutment portion (413) of said driving member (41) to rotatably extend thereinto, and said second side seat (12) further has a second axle hole (125) that permits said urging portion (414) of said driving member (41) to rotatably extend thereinto.

4. The brake caliper (100) as claimed in claim 1, **characterized in that** said first side seat (11) further has a first engaging groove (114), and said second side seat (12) further has a second engaging groove (124), said first push member (42) slidably engaging said first engaging groove (114) of said first side seat (11), and being movable relative to said first side seat (11) along the central axis (L2), said second push member (43) slidably engaging said second engaging groove (124) of said second side seat (12), and being movable relative to said second side seat (12) along the central axis (L2) .

5. The brake caliper (100) as claimed in claim 4, further **characterized in that** said first side seat (11) further has a first slide hole (116) that extends in an axis parallel to the central axis (L2), and said second side seat (12) further has a second slide hole (126) that extends in an axis parallel to the central axis (L2), said first push member (42) having a first pin (422) that is slidable along said first slide hole (116), said second push member (43) having a second pin (433) that is slidable along said second slide hole (126).

6. The brake caliper (100) as claimed in claim 1, **characterized in that** said hand-brake unit (40) further includes a resilient member (44) that is sleeved on said rod body (411) of said driving member (41), and that has two opposite ends respectively abutting against said first and second push members (42, 43) for resiliently biasing said first and second push members (42, 43) away from each other.

## Patentansprüche

1. Bremssattel (100), der dazu angepasst ist, mit einer Bremsscheibe (200) verwendet zu werden, wobei die Bremsscheibe (200) eine Drehachse (L1) und eine erste und eine dazu entgegengesetzte zweite Endfläche (210, 220) hat, die senkrecht zur Drehachse (L1) sind, wobei der Bremssattel (100) umfasst:
eine Hauptkörpereinheit (10), die einen ersten und zweiten Seitensitz (11, 12) aufweist, die sich beidseits der Bremsscheibe (200) befinden und an die erste bzw. zweite Endfläche (210, 220) angrenzen, wobei der erste und zweite Seitensitz (11, 12) miteinander verbunden sind und in Wirkverbindung einen Betriebsraum (13) dazwischen definieren, der dazu angepasst ist, die Bremsscheibe (200) teilweise aufzunehmen, wobei der erste Seitensitz (11) mindestens eine erste Ölkammer (112) hat, die dazu angepasst ist, zur ersten Endfläche (210) der Bremsscheibe (200) hin gewandt zu sein, wobei der zweite Seitensitz (12) mindestens eine zweite Ölkammer (122) hat, die dazu angepasst ist, zur zweiten Endfläche (220) der Bremsscheibe (200) hin gewandt zu sein;
eine Kolbeneinheit (20), die mindestens einen ersten Kolben (21), der beweglich in der ersten Ölkammer (112) angeordnet ist, und mindestens einen zweiten Kolben (22) aufweist, der beweglich in der zweiten Ölkammer (122) angeordnet ist;
eine Auskleidungseinheit (30), die ein erstes und ein zweites Positionierungsteil (31, 32), die beweglich in dem Betriebsraum (13) angeordnet sind, und eine erste und eine zweite Auskleidung (33, 34) aufweist, die am ersten bzw. zweiten Positionierungsteil (31, 32) montiert sind, wobei das erste Positionierungsteil (21) dem ersten Kolben (21) zugeordnet ist, wobei das zweite Positionierungsteil (32) dem zweiten Kolben (22) zugeordnet ist; und
eine Handbremseneinheit (40), die ein Antriebsteil (41), das sich entlang einer Mittelachse (L2) erstreckt und am ersten und zweiten Seitensitz (11, 12) montiert ist, ein erstes Andrückteil (42), das zwischen dem ersten Seitensitz (11) und dem ersten Positionierungsteil (31) angeordnet ist, und ein zweites Andrückteil (43) aufweist, das zwischen dem zweiten Seitensitz (12) und dem zweiten Positionierungsteil (32) angeordnet ist, wobei die Mittelachse (L2) parallel zur Drehachse (L1) ist;
wobei das Antriebsteil (41) einen langgestreckten Stangenkörper (411), der sich entlang der Mittelachse (L2) erstreckt, einen Betätigungsabschnitt (412), der an einem Längsende des Stangenkörpers (411) angeordnet ist, einen Anlageabschnitt (413) hat, der fest am anderen Längsende des Stangenkörpers (411), dem Betätigungsabschnitt (412) entgegengesetzt angeordnet ist, wobei der Bremssattel **dadurch gekennzeichnet ist, dass** ein Druckausübungsabschnitt (414) fest am Stangenkörper (411) angeordnet ist, der sich zwischen dem Betätigungsabschnitt (412) und dem Anlageabschnitt (413) befindet, und der eine geneigte Druckausübungsfläche (416) hat, die schräg zur Mittelachse (L2) verläuft und zum Anlageabschnitt (413) hin gewandt ist, wobei das erste Andrückteil (42) zwischen dem Anlageabschnitt (413) und dem Druckausübungsabschnitt (414) in Anlage am Anlageabschnitt (413) angeordnet und mit einer ersten Durchgangsöffnung (421) ausgebildet ist, die das Antriebsteil (41) sich beweglich durch diese hindurch erstrecken lässt, wobei das zweite Andrückteil (43) zwischen dem Druckausübungsabschnitt (414) und dem Anlageabschnitt (413) in Anlage am Druckausübungsabschnitt (414) angeordnet und mit einer zweiten Durchgangsöffnung (431) ausgebildet ist, die das Antriebsteil (41) sich beweglich durch diese hindurch erstrecken lässt und eine geneigte Anlagefläche (432) hat, die schräg zur Mittelachse (L2) ist, die dem Druckausübungsabschnitt (414) zugewandt und in Gleitkontakt mit der Druckausübungsfläche (416) des Druckausübungsabschnitts (414) ist;
wobei, wenn der Betätigungsabschnitt (412) durch eine externe Kraft gedreht wird, so dass das Antriebsteil (41) um die Mittelachse (L2) in Bezug auf das erste und zweite Andrückteil (42, 43) gedreht wird, um eine relative Drehbewegung zwischen der geneigten Druckausübungsfläche (416) und der geneigten Anlagefläche (432) zu generieren, die Druckausübungsfläche (416) des Antriebsteils (41) auf die Anlagefläche (432) des zweiten Andrückteils (43) drückt, um das erste und zweite Andrückteil (42, 43) aufeinander zu zu bewegen, damit gegen die erste und die zweite Auskleidung (33, 34) gedrückt wird, um jeweils und reibungstechnisch die erste und zweite Endfläche (210, 220) der Bremsscheibe (200) zu kontaktieren, um eine Drehung der Bremsscheibe (200) zu verhindern.

2. Bremssattel (100) nach Anspruch 1, **dadurch gekennzeichnet, dass** das Antriebsteil (41) der Handbremseneinheit (40) darüber hinaus einen angetriebenen Abschnitt (415) hat, der am Betätigungsabschnitt (412) montiert ist, und der funktionsfähig ist, um das Antriebsteil (41) um die Mittelachse (L2) zu drehen.

3. Bremssattel (100) nach Anspruch 2, darüber hinaus **dadurch gekennzeichnet, dass** der erste Seitensitz (11) darüber hinaus eine erste Achsöffnung (115) hat, die den Anlageabschnitt (413) des Antriebsteils (41) sich drehbar in diese hinein erstrecken lässt, und der zweite Seitensitz (12) darüber hinaus eine zweite Achsöffnung (125) hat, die den Druckausübungsabschnitt (414) des Antriebsteils (41) sich drehbar in diese hinein erstrecken lässt.

4. Bremssattel (100) nach Anspruch 1, **dadurch gekennzeichnet, dass** der erste Seitensitz (11) darüber hinaus eine erste Eingriffsnut (114), und der zweite Seitensitz (12) darüber hinaus eine zweite Eingriffsnut (124) hat, wobei das erste Andrückteil (42) gleitend die erste Eingriffsnut (114) des ersten Seitensitzes (11) in Eingriff nimmt und in Bezug auf den ersten Seitensitz (11) entlang der Mittelachse (L2) beweglich ist, wobei das zweite Andrückteil (43) gleitend die zweite Eingriffsnut (124) des zweiten Seitensitzes (12) in Eingriff nimmt und in Bezug auf den zweiten Seitensitz (12) entlang der Mittelachse (L2) beweglich ist.

5. Bremssattel (100) nach Anspruch 4, darüber hinaus **dadurch gekennzeichnet, dass** der erste Seitensitz (11) darüber hinaus eine erste Gleitöffnung (116) hat, die sich in einer Achse parallel zur Mittelachse (L2) erstreckt, und der zweite Seitensitz (12) darüber hinaus eine zweite Gleitöffnung (126) hat, die sich in einer Achse parallel zur Mittelachse (L2) erstreckt, wobei das erste Andrückteil (42) einen ersten Stift (422) hat, der entlang der ersten Gleitöffnung (116) gleitbeweglich ist, wobei das zweite Andrückteil (43) einen zweiten Stift (433) hat, der entlang der zweiten Gleitöffnung (126) gleitbeweglich ist.

6. Bremssattel (100) nach Anspruch 1, **dadurch gekennzeichnet, dass** die Handbremseneinheit (40) darüber hinaus ein federelastisches Teil (44) aufweist, das auf den Stangenkörper (411) des Antriebsteils (41) aufgeschoben ist, und das zwei entgegengesetzte Enden hat, die am ersten bzw. zweiten Andrückteil (42, 43) anliegen, um das erste und zweite Andrückteil (42, 43) federelastisch voneinander weg zu drücken.

## Revendications

1. Étrier de frein (100) adapté pour être utilisé avec un disque de frein (200), le disque de frein (200) ayant un axe de rotation (L1), et une première et une deuxième surface d'extrémité (210, 220) opposées perpendiculaires à l'axe de rotation (L1), ledit étrier de frein (100) comprenant :
une unité de corps principal (10) incluant un premier et un deuxième siège latéral (11, 12) situés respectivement de deux côtés du disque de frein (200) et adjacents respectivement à la première et la deuxième surface d'extrémité (210, 220), ledit premier et ledit deuxième siège latéral (11, 12) étant interconnectés et définissant conjointement un espace de manœuvre (13) entre eux qui est adapté pour recevoir en partie le disque de frein (200), ledit premier siège latéral (11) présentant au moins une première chambre à huile (112) qui est adaptée pour faire face à la première surface d'extrémité (210) du frein à disque (200), ledit deuxième siège latéral (12) présentant au moins une deuxième chambre à huile (122) qui est adaptée pour faire face à la deuxième surface d'extrémité (220) du disque de frein (200) ;
une unité de pistons (20) incluant au moins un premier piston (21) qui est disposé de manière mobile dans ladite première chambre à huile (112), et au moins un deuxième piston (22) qui est disposé de manière mobile dans ladite deuxième chambre à huile (122) ;
une unité de garnissage (30) incluant un premier et un deuxième élément de positionnement (31, 32) qui sont disposés de manière mobile dans ledit espace de manœuvre (13), et un premier et un deuxième garnissage (33, 34) qui sont montés respectivement sur ledit premier et ledit deuxième élément de positionnement (31, 32), ledit premier élément de positionnement (31) étant associé audit premier piston (21), ledit deuxième élément de positionnement (32) étant associé audit deuxième piston (22) ; et
une unité de frein à main (40) incluant un élément d'entraînement (41) qui s'étend le long d'un axe central (L2) et qui est monté sur ledit premier et ledit deuxième siège latéral (11, 12), un premier élément de poussée (42) qui est disposé entre ledit premier siège latéral (11) et ledit premier élément de positionnement (31), et un deuxième élément de poussée (43) qui est disposé entre ledit deuxième siège latéral (12) et ledit deuxième élément de positionnement (32), l'axe central (L2) étant parallèle à l'axe de rotation (L1) ;
ledit élément d'entraînement (41) présentant un corps en tige (411) allongé qui s'étend le long de l'axe central (L2), une partie de manœuvre (412) qui est disposée à une extrémité longitudinale dudit corps en tige (411), une partie de butée (413) qui est disposée de manière fixe à l'autre extrémité longitudinale dudit corps en tige (411) à l'opposé de ladite partie de manœuvre (412),
ledit étrier de frein étant **caractérisé en ce qu'**une partie d'actionnement (414) est disposée de manière fixe sur ledit corps en tige (411), laquelle est située entre ladite partie de manœuvre (412) et ladite partie de butée (413), et qui présente une surface d'actionnement (416) inclinée oblique par rapport à l'axe central (L2) et faisant face à ladite partie de butée (413), ledit premier élément de poussée (42) étant disposé entre ladite partie de butée (413) et ladite partie d'actionnement (414), en butée contre ladite partie de butée (413), et pourvu d'un premier trou traversant (421) qui permet audit élément d'entraînement (41) de s'étendre de manière mobile à travers lui, ledit deuxième élément de poussée (43) étant disposé entre ladite partie d'actionnement (414) et ladite partie de butée (413), en butée contre ladite partie d'actionnement, pourvu d'un deuxième trou traversant (431) qui permet audit élément d'entraînement (41) de s'étendre de manière mobile à travers lui, et présentant une surface de butée (432) inclinée qui est oblique par rapport à l'axe central (L2), qui fait face à ladite partie d'actionnement (414) et qui est en contact coulissant avec ladite surface d'actionnement (416) de ladite partie d'actionnement (414) ;
sachant que, lorsque ladite partie d'actionnement (412) est mise en rotation par une force externe de telle sorte que ledit élément d'entraînement (41) soit mis en rotation autour de l'axe central (L2) par rapport audit premier et audit deuxième élément de poussée (42, 43) pour générer un mouvement de rotation relatif entre ladite surface d'actionnement (416) inclinée et ladite surface de butée (432) inclinée, ladite surface d'actionnement (416) dudit élément d'entraînement (41) pousse ladite surface de butée (432) dudit deuxième élément de poussée (43) pour qu'il déplace ledit premier et ledit deuxième élément de poussée (42, 43) l'un vers l'autre de manière à pousser ledit premier et ledit deuxième garnissage (33, 34) pour qu'ils entrent en contact respectivement et par frottement avec la première et la deuxième surface d'extrémité (210, 220) du disque de frein (200) pour inhiber la rotation du disque de frein (200).

2. L'étrier de frein (100) tel que revendiqué dans la revendication 1, **caractérisé en ce que** ledit élément d'entraînement (41) de ladite unité de frein à main (40) présente en outre une partie entraînée (415) qui est montée sur ladite partie de manœuvre (412) et qui est manœuvrable pour mettre en rotation ledit élément d'entraînement (41) autour de l'axe central (L2).

3. L'étrier de frein (100) tel que revendiqué dans la revendication 2, **caractérisé en outre en ce que** ledit premier siège latéral (11) présente en outre un premier trou d'essieu (115) qui permet à ladite partie de butée (413) dudit élément d'entraînement (41) de s'étendre de manière rotative dans celui-ci, et ledit deuxième siège latéral (12) présente en outre un deuxième trou d'essieu (125) qui permet à ladite partie d'actionnement (414) dudit élément d'entraînement (41) de s'étendre de manière rotative dans celui-ci.

4. L'étrier de frein (100) tel que revendiqué dans la revendication 1, **caractérisé en ce que** ledit premier siège latéral (11) présente en outre une première rainure de mise en prise (114), et ledit deuxième siège latéral (12) présente en outre une deuxième rainure de mise en prise (124), ledit premier élément de poussée (42) mettant en prise de manière coulissante ladite première rainure de mise en prise (114) dudit premier siège latéral (11), et étant mobile par rapport audit premier siège latéral (11) le long de l'axe central (L2), ledit deuxième élément de poussée (43) mettant en prise de manière coulissante ladite deuxième rainure de mise en prise (124) dudit deuxième siège latéral (12), et étant mobile par rapport audit deuxième siège latéral (12) le long de l'axe central (L2).

5. L'étrier de frein (100) tel que revendiqué dans la revendication 4, **caractérisé en outre en ce que** ledit premier siège latéral (11) présente en outre un premier trou de coulissement (116) qui s'étend dans un axe parallèle à l'axe central (L2), et ledit deuxième siège latéral (12) présente en outre un deuxième trou de coulissement (126) qui s'étend dans un axe parallèle à l'axe central (L2), ledit premier élément de poussée (42) présentant une première broche (422) qui est coulissante le long dudit premier trou de coulissement (116), ledit deuxième élément de poussée (43) présentant une deuxième broche (433) qui est coulissante le long dudit deuxième trou de coulissement (126).

6. L'étrier de frein (100) tel que revendiqué dans la revendication 1, **caractérisé en ce que** ladite unité de frein à main (40) inclut en outre un élément souple (44) qui est emmanché sur ledit corps en tige (411) dudit élément d'entraînement (41), et qui présente deux extrémités opposées qui sont respectivement en butée contre ledit premier et ledit deuxième élément de poussée (42, 43) pour contraindre de manière souple ledit premier et ledit deuxième élément de poussée (42, 43) à s'éloigner l'un de l'autre.
